# EUROPÄISCHE PATENTANMELDUNG

(11) **EP 4 498 011 A1**
(43) Veröffentlichungstag der Anmeldung: **29.01.2025**
(21) Anmeldenummer: 24189421.1
(22) Anmeldetag: 18.07.2024
(51) Int. Cl.: F24F 11/50, F24F 11/74, F24F 11/88, H04B 3/00, H04L 12/12

(54) **SYSTEM UMFASSEND ZUMINDEST ZWEI KOMPONENTEN ZUR STEUERUNG UND/ODER ZUR REGELUNG EINES IN EINEM STRÖMUNGSKANAL EINER KLIMATECHNISCHEN UND/ODER RAUMLUFTTECHNISCHEN ANLAGE STRÖMENDEN VOLUMENSTROMS**

(30) Priorität: 28.07.2023 DE 202023104254 U
(71) Anmelder: TROX GmbH, 47506 Neukirchen-Vluyn (DE)
(72) Erfinder: Olders, Matthias, 47506 Neukirchen-Vluyn (DE); Geisler, Andy, 46535 Dinslaken (DE)
(74) Vertreter: Dr. Stark & Partner Patentanwälte mbB

(57) **Zusammenfassung**

Die Erfindung betrifft ein System umfassend zumindest zwei Komponenten (1, 2, 3, 4 oder 5) zur Steuerung und/oder zur Regelung eines in einem Strömungskanal einer klimatechnischen und/oder raumlufttechnischen Anlage strömenden Volumenstroms. Um ein System anzugeben, das sich durch eine einfachere Verkabelung auszeichnet und bei dem der Aufwand bei der Montage für die Verkabelung der einzelnen Komponenten dieses Systems vereinfacht werden kann, sollen zumindest zwei Komponenten (1, 2, 3, 4 oder 5) wenigstens jeweils eine Schnittstelle (6, 7) aufweisen, wobei jeweils zwei Komponenten (1, 2, 3, 4 oder 5) über ihre jeweiligen Schnittstellen (6, 7) direkt mittels einer einzigen, an den jeweiligen Schnittstellen (6, 7) jeweils angeschlossenen Leitungsverbindung (9) miteinander verbunden sein und wobei über diese Leitungsverbindung (9) jeweils sowohl die Datenübertragung als auch die Spannungsversorgung erfolgt.

## Beschreibung

Die Erfindung betrifft ein System umfassend zumindest zwei Komponenten zur Steuerung und/oder zur Regelung eines in einem Strömungskanal einer klimatechnischen und/oder raumlufttechnischen Anlage strömenden Volumenstroms. Selbstverständlich kann das System auch mehrere Strömungskanäle aufweisen, was insbesondere bei klimatechnischen und/oder raumlufttechnischen Anlagen in großen Gebäuden der Fall ist.

Auf der Baustelle werden die Komponenten des zu installierenden Systems zunächst montiert. Dann schließt sich die Verkabelung an. Hierfür werden in der Regel von einer zentralen Komponente zu jeder Komponente des Systems die Datenkabel verlegt. Ferner wird von einer Spannungsquelle zu jeder Komponente ein Kabel für die Spannungsversorgung verlegt. Diese Art der Verkabelung ist aufwändig.

Aufgabe der Erfindung ist es, die vorgenannten Nachteile zu vermeiden und ein System anzugeben, das sich durch eine einfachere Verkabelung auszeichnet und bei dem der Aufwand bei der Montage für die Verkabelung der einzelnen Komponenten dieses Systems vereinfacht werden kann.

Diese Aufgabe wird dadurch gelöst, dass zumindest zwei Komponenten wenigstens jeweils eine Schnittstelle aufweisen, wobei jeweils zwei Komponenten über ihre jeweiligen Schnittstellen direkt mittels einer einzigen, an den jeweiligen Schnittstellen jeweils angeschlossenen Leitungsverbindung miteinander verbunden sind und wobei über diese Leitungsverbindung jeweils sowohl die Datenübertragung als auch die Spannungsversorgung erfolgt. Die jeweilige Leitungsverbindung ist insoweit jeweils als Bus ausgebildet. Die Leitungsverbindung(en) des erfindungsgemäßen Systems weist(weisen) eine so genannte Daisy-Chain-Funktionalität auf. Bei einer Daisy-Chain-Verbindung sind mehrere Komponenten über ein Bussystem in Reihenschaltung untereinander verbunden. Bei der erfindungsgemäßen Ausgestaltung dient die Daisy-Chain-Verbindung sowohl als Datenstrecke, als auch der Spannungsversorgung. Bei dem Bussystem mit der vorbeschriebenen Daisy-Chain-Funktionalität kann es sich beispielsweise um DisplayPort, um DMX, um Thunderbolt oder um Fire-Wire handeln.

Die erfindungsgemäße Ausgestaltung erlaubt eine unkomplizierte und schnelle Verkabelung der Komponenten. Auch kann die Gefahr von Montagefehlern reduziert werden. So ist lediglich die entsprechende Anzahl an geeigneten Leitungsverbindungen erforderlich, um die Komponenten vor Ort auf der Baustelle miteinander zu verbinden. Dabei muss nicht berücksichtigt werden, in welcher Reihenfolge die betreffenden Komponenten miteinander verbunden werden. Nach Einstecken einer Leitungsverbindung ist sowohl die Datenstrecke, als auch die Spannungsversorgung hergestellt.

Bei einem System mit mehr als zwei Komponenten können jeweils zwei der Komponenten direkt über eine einzige Leitungsverbindung miteinander verbunden sein, wobei die Gesamtheit aller über jeweils eine separate Leitungsverbindung miteinander verbundener Komponenten in Reihe miteinander verbunden sind.

Dabei kann zumindest eine Komponente einen Anschluss an ein Spannungsnetz aufweisen. Das Spannungsnetz kann beispielsweise 12 V oder 24 V aufweisen.

Zumindest eine Schnittstelle kann als RS-485-Schnittstelle ausgebildet sein. Dieser Schnittstellen-Standard erlaubt eine digitale, serielle Datenübertragung.

Alternativ kann zumindest eine Schnittstelle als RS-232-Schnittstelle ausgebildet sein. Auch dieser Schnittstellen-Standard erlaubt eine digitale, serielle Datenübertragung.

Andere digitale Schnittstellen, wie beispielsweise Ethernet oder dergleichen, sind selbstverständlich möglich.

Zumindest eine Schnittstelle kann zur Aufnahme einer RJ-Steckverbindung, vorzugsweise einer RJ45-Steckverbindung, ausgebildet sein.

Zumindest eine Komponente kann als Regler ausgebildet sein. Bei einem Regler kann es sich beispielsweise um einen Zuluftregler, um einen Abluftregler oder um einen Raumregler handeln.

Zumindest eine Komponente kann als Antrieb ausgebildet sein.

Selbstverständlich kann es sich bei zumindest einer Komponente auch um eine mittels eines Antriebs verlagerbare Drosselklappe handeln.

Zumindest eine Komponente kann als Ventil ausgebildet sein.

Zumindest eine Komponente kann als Raumbedieneinheit ausgebildet sein. Bei zumindest einer Komponente kann es sich auch um einen Sensor, wie beispielsweise um einen Temperatursensor, handeln.

Bei zumindest einer Komponente kann es sich um die Gebäudeleittechnik (GLT) handeln.

Im Folgenden werden in den Zeichnungen dargestellte Ausführungsbeispiele der Erfindung erläutert. Es zeigen:
- Fig. 1: eine mögliche Ausgestaltung eines erfindungsgemäßen Systems,
- Fig. 2: eine Draufsicht auf eine Komponente des erfindungsgemäßen Sys-tems aus Fig. 1 und
- Fig. 3: eine Seitenansicht des Gegenstandes nach Fig. 2.

In allen Figuren werden für gleiche bzw. gleichartige Bauteile übereinstimmende Bezugszeichen verwendet.

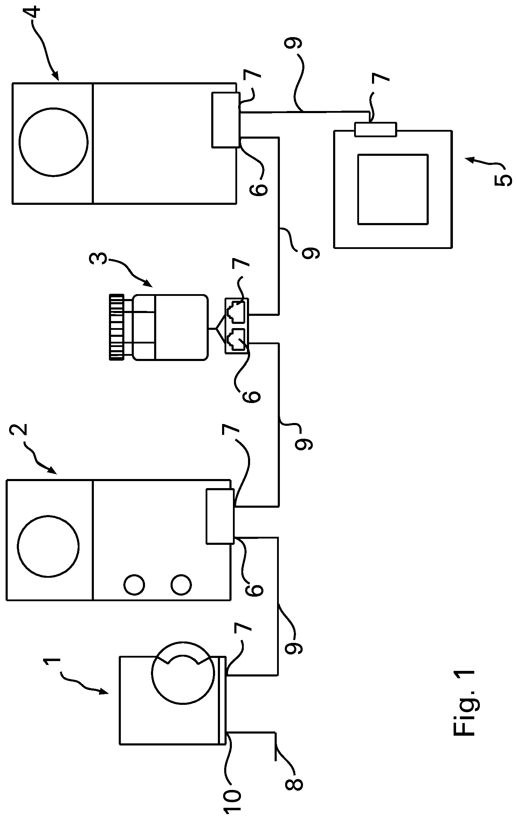

Fig. 1 zeigt ein denkbares Ausführungsbeispiel eines erfindungsgemäßen Systems, das aus insgesamt fünf Komponenten 1 bis 5 zur Steuerung und/oder zur Regelung eines in einem Strömungskanal einer klimatechnischen und/oder einer raumlufttechnischen Anlage strömenden Volumenstroms dient. Die einzelnen lufttechnischen weiteren Bauteile des Systems, wie beispielsweise der Strömungskanal, eine Klappe, ein Ventilator oder dergleichen sind nicht dargestellt.

Bei der Komponente 1 kann es sich beispielsweise um einen Raumregler handeln, während die Komponente 2 in dem dargestellten Fall als variabler Zuluftregler ausgebildet ist. Zur Steuerung oder Regelung der Abluft ist die Komponente 4 als variabler Abluftregler ausgebildet. Ein Ventil ist beispielhaft als Komponente 3 dargestellt. Die Komponente 5 ist als Raumbedieneinheit ausgebildet. Mittels der Raumbedieneinheit, die in der Regel in einem zu belüftenden und/oder in einem entlüftenden Raum installiert ist, kann eine Person die gewünschte Temperatur einstellen, die dann mittels des erfindungsgemäßen Systems eingeregelt wird.

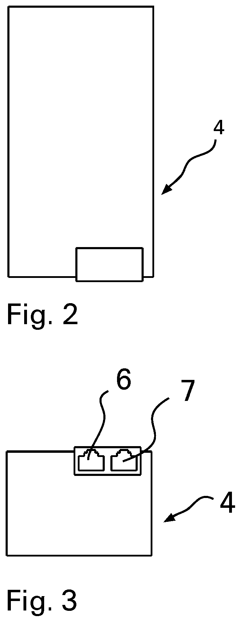

In dem dargestellten Ausführungsbeispiel umfasst zumindest jede der Komponenten 2 bis 4, wie beispielsweise in Fig. 3 dargestellt ist, jeweils zwei Schnittstellen 6, 7, die jeweils zur Aufnahme einer RJ-45-Steckverbindung ausgebildet sind. Eine RJ-45-Steckverbindung hat acht Kontakte, die unterschiedlich belegt sein können. Bei Verwendung einer RJ-45-Steckverbindung hat die entsprechende Leitungsverbindung 9 auch acht Litzen. So können beispielsweise drei Kontakte als Ground, d. h. als gemeinsamer Minuspol, dienen. Über zumindest einen Kontakt erfolgt die Spannungsversorgung. Bei Verwendung einer Leitungsverbindung mit geringen Litzenquerschnitten können zur Erhöhung der Querschnittsfläche mehrere, beispielsweise drei, Kontakte für die Spannungsversorgung beispielsweise mit 24 V verwendet werden. Zwei Kontakte können beispielsweise das Format einer RS-485-Schnittstelle aufweisen. Bei den Schnittstellen 6, 7 handelt es sich um differentielle Schnittstellen.

Die Komponenten 1 und 5 weisen jeweils zumindest eine Schnittstelle 7, die zur Aufnahme einer RJ-45-Steckverbindung ausgebildet sind, auf. Es ist jedoch auch durchaus möglich, dass die Komponenten 1 und 5 auch zwei Schnittstellen 6, 7, die zur Aufnahme einer RJ-45-Steckverbindung ausgebildet sind, aufweisen. Dann kann auch die Komponente 1 und/oder auch die Komponente 5 in einer Reihe jeweils mit einer nicht dargestellten weiteren Komponente verbunden werden. Auf diese Weise kann beispielsweise die Komponente 2 in Reihe an eine nicht dargestellte Gebäudeleitechnik (GLT) angeschlossen werden.

Die Komponente 3 ist als Ventil ausgebildet. Da die Gehäuseabmessungen eines Ventils begrenzt sind, sind die beiden Schnittstellen 6, 7 in einen Adapter "ausgelagert".

Wie Fig. 1 zu entnehmen ist, ist bei dem dargestellten Ausführungsbeispiel die Komponente 1 mittels einer Leitung 8 an eine nicht dargestellte Spannungsversorgung mit 24 V angeschlossen. Hierzu weist die Komponente 1 einen Anschluss 10 auf.

In dem dargestellten Ausführungsbeispiel umfasst das System vier das Bussystem bildende vorbeschriebene Leitungsverbindungen 9, die jeweils acht Litzen und zwei endseitige RJ-45-Steckverbindung aufweisen. Mittels der Leitungsverbindungen 9 sind die Komponenten 1 bis 5 in Reihe miteinander verbunden. Die vier Leitungsverbindungen 9 sind insoweit in dem dargestellten Ausführungsbeispiel identisch ausgebildet. An beiden Enden der auf diese Weise gebildeten Bus-Leitung, d. h. an der Komponente 1 und an der Komponente 5, ist jeweils ein nicht dargestellter Endwiderstand zur Terminierung des Busses vorgesehen.

Die vier Leitungsverbindungen 9 dienen nicht nur zur Übertragung von Daten zwischen den Komponenten 1 bis 5. Vielmehr erfolgt über die vier Leitungsverbindungen 9 auch die Spannungsversorgung der Komponenten 2 bis 5.

Die Installation des erfindungsgemäßen Systems ist einfach. So werden auf der Baustelle lediglich die Komponenten 1 bis 5 installiert. Die erforderlichen Leitungsverbindungen 9 können bereits werkseitig vorkonfektioniert werden. Bei der Vorkonfektionierung werden die Leitungsverbindungen 9 in der gewünschten Länge abgelängt und mit jeweils zwei Steckern versehen. Der Monteur muss auf der Baustelle lediglich jeweils zwei Komponenten 1 und 2 bzw. 2 und 3 bzw. 3 und 4 bzw. 4 und 5 direkt mit jeweils einer Leitungsverbindung 9 verbinden. Wenn es die Länge der Leitungsverbindungen 9 erlaubt, können die Komponenten 1 bis 5 auch in einer anderen Reihenfolge aufgrund der Reihenschaltung verbunden werden.

Wie Fig. 1 zeigt, sind jeweils zwei der Komponenten 1 bis 5, nämlich die Komponenten 1 und 2 bzw. 2 und 3 bzw. 3 und 4 bzw. 4 und 5 jeweils direkt über je eine einzige Leitungsverbindung 9 miteinander verbunden. Die Gesamtheit der über jeweils eine separate Leitungsverbindung 9 miteinander verbundenen Komponenten 1 bis 5 ist dabei in Reihe miteinander verbunden. Das vorbeschriebene erfindungsgemäße System bestehend aus den fünf, über vier Leitungsverbindungen 9 in Reihe verbundener Komponenten 1 bis 5 weist insoweit eine so genannte Daisy-Chain Funktionalität auf.

Im letzten Schritt muss nur noch die Komponente 1 mittels der Leitung 8 an eine nicht dargestellte Spannungsversorgung angeschlossen werden. Die Leitung 8 wird hierfür in den Anschluss 10 in der Komponente 1 gesteckt. Sofern die Komponente 1 neben der dargestellten Schnittstelle 7 eine weitere Schnittstelle 6 aufweist und die Komponente 1 über eine nicht dargestellte Leitungsverbindung 9 mit einer nicht dargestellten Komponente oder an eine GLT, die an eine Spannungsversorgung angeschlossen ist, verbunden ist, muss die Komponente 1 nicht über die Leitung 8 an eine Spannungsquelle angeschlossen sein.

## Patentansprüche

1. System umfassend zumindest zwei Komponenten (1, 2, 3, 4 oder 5) zur Steuerung und/oder zur Regelung eines in einem Strömungskanal einer klimatechnischen und/oder raumlufttechnischen Anlage strömenden Volumenstroms, **dadurch gekennzeichnet, dass** zumindest zwei Komponenten (1, 2, 3, 4 oder 5) wenigstens jeweils eine Schnittstelle (6, 7) aufweisen, wobei jeweils zwei Komponenten (1, 2, 3, 4 oder 5) über ihre jeweiligen Schnittstellen (6, 7) direkt mittels einer einzigen, an den jeweiligen Schnittstellen (6, 7) jeweils angeschlossenen Leitungsverbindung (9) miteinander verbunden sind und wobei über diese Leitungsverbindung (9) jeweils sowohl die Datenübertragung als auch die Spannungsversorgung erfolgt.

2. System nach dem vorhergehenden Anspruch, **dadurch gekennzeichnet, dass** bei einem System mit mehr als zwei Komponenten (1, 2, 3, 4 oder 5) jeweils zwei der Komponenten (1, 2, 3, 4 oder 5) direkt über eine einzige Leitungsverbindung (9) miteinander verbunden sind, wobei die Gesamtheit aller über jeweils eine separate Leitungsverbindung (9) miteinander verbundener Komponenten (1, 2, 3, 4 oder 5) in Reihe miteinander verbunden sind.

3. System nach einem der vorhergehenden Ansprüche, **dadurch gekennzeichnet, dass** zumindest eine Komponente (1, 2, 3, 4 oder 5) einen Anschluss (10) an ein Spannungsnetz aufweist.

4. System nach einem der vorhergehenden Ansprüche, **dadurch gekennzeichnet, dass** zumindest eine Schnittstelle (6 oder 7) als RS-485-Schnittstelle ausgebildet ist.

5. System nach einem der vorhergehenden Ansprüche, **dadurch gekennzeichnet, dass** zumindest eine Schnittstelle (6 oder 7) als RS-232-Schnittstelle ausgebildet ist.

6. System nach einem der vorhergehenden Ansprüche, **dadurch gekennzeichnet, dass** zumindest eine Schnittstelle (6 oder 7) zur Aufnahme einer RJ-Steckverbindung, vorzugsweise einer RJ-45-Steckverbindung, ausgebildet ist.

7. System nach einem der vorhergehenden Ansprüche, **dadurch gekennzeichnet, dass** zumindest eine Komponente als Regler, vorzugsweise als Zuluftregler, als Abluftregler oder als Raumregler, ausgebildet ist.

8. System nach einem der vorhergehenden Ansprüche, **dadurch gekennzeichnet, dass** zumindest eine Komponente als Antrieb ausgebildet ist.

9. System nach einem der vorhergehenden Ansprüche, **dadurch gekennzeichnet, dass** zumindest eine Komponente als Ventil ausgebildet ist.

10. System nach einem der vorhergehenden Ansprüche, **dadurch gekennzeichnet, dass** zumindest eine Komponente als Raumbedieneinheit ausgebildet ist.

11. System nach einem der vorhergehenden Ansprüche, **dadurch gekennzeichnet, dass** zumindest eine Komponente als Gebäudeleittechnik (GLT) ausgebildet ist.
